# EUROPEAN PATENT SPECIFICATION

(11) **EP 0 607 934 B1**
(45) Date of publication and mention of the grant of the patent: **10.06.1998**
(21) Application number: 94100688.4
(22) Date of filing: 19.01.1994
(51) Int. Cl.: C09D 127/12, B05D 7/26, B05D 5/08, A47J 36/02

(54) **Painting formulations for anti-adherent coatings**
Beschichtungsformulierungen für nichtbenetzbare Beschichtungen
Formulations de revêtement pour couches anti-adhérentes

(30) Priority: 21.01.1993 IT MI930086
(43) Date of publication of application: 27.07.1994
(73) Proprietor: LAMBDA S.r.l., I-20070 Fombio (Prov. of Milan) (IT)
(72) Inventor: Bignami, Claudio, I-20071 Casalpusterlengo (IT)
(74) Representative: Gervasi, Gemma, Dr.

(56) References cited:
- US-A- 4 818 350

## Description

The present invention refers to new formulations of painting products for water-based anti-adherent coatings containing fluoropolymers, in particular polytetrafluoroethylene (PTFE), applicable by rolling on aluminium discs previously non-pickled but only degreased, for the production of cookware by moulding.

Moreover, the present invention refers to a finished product which has been treated with foresaid painting products after the moulding operations.

The advantages offered by a rolling application process in comparison with a spray application process are well known. First of all the rolling application is much less expensive than the spray one, since by this way it is avoided a large wasting of dispersed and non-settled material. Secondly, the rolling process implies little harmfulness and slight environmental pollution, since the released aerosol quantities are negligible.

The advantages due to the elimination of the pickling process are well known too, like as the reduction of the pre-treatment costs of the disc, the elimination of the polluting liquid and gaseous effluents generated during the pickling process, the productivity increasing obtained through the elimination of the "bottleneck" represented by the pickling process itself that is "slower" than the subsequent step of rolling application of the paints, and the possibility to have a larger elasticity in buying the aluminium plates, as far as some kinds of aluminium are not appropriate for pickling and they have to be rejected although they are very inexpensive.

Referring to the painting products for anti-adherent coatings applicable on non-pickled aluminium discs and only degreased, formulations are well known based on solvents suffering however the drawback of requiring a high harmfulness degree and environmental pollution because of the large quantities of solvents released during the working.

Water-based painting products for anti-adherent coatings applicable on non-pickling and only degreased aluminium are well known too. These products have excellent adhesion to the support, however they are not elastic and it is impossible to apply them on the discs, as far as in this case the coating would be destroyed during the subsequent moulding process. For this reason it is possible to apply them only by a spray application on the moulded articles.

As consequence of that, the purpose of the present invention is to provide water-based formulations of painting products for anti-adherent coatings of cookware; these products contain fluoropolymers, in particular PTFE, that can be applied by rolling on degreased but non-pickled aluminium discs allowing to reach the above said advantages and to overcome the foresaid drawbacks.

USP 4,818,350 describes the coating of grit blasted aluminium discs comprising a primer coat containing PTFE, PAI, colloidal silica and pigments; an intermediary coat containing PTFE, pigments and acrylic resin as coalescing agent which can be decomposed by heat; a top coat containing PTFE, mica, acrylic resin as coalescing agent and a dryer to enhance acrylic resin decomposition. Nevertheless, the painting formulations are applied by spraying on aluminium discs previously roughened by grit blasting.

The formulations according to the present invention are characterised in that they comprise three different kinds of painting products applicable by rolling according to the technology contained in a patent filed by the same applicant (Italian patent n° 1 226 348, filed on July 12, 1988; Application Number 21329 A/88) :
1) A first product (Product-A) having high adhesion power, directly applicable on the aluminium disc, previously only degreased and dried; said product-A comprises polytetrafluoroethylene (PTFE), polyamideimide resin (PAI), polyphenylensulfide (PPS), three surface-active substances consisting of monoethylene glycol, propylene glycol and polyethoxylated alkylphenols (APPE) having an ethoxyde number comprised between 8 and 12, and an alkyl group with a number of carbon atoms comprised between 6 and 12, the pigment carbon black and deionised water as dispersing medium;
2) A second product (Product-B) applicable on said Product-A and having less adhesion power of the former Product-A and closer to the anti-adherent nature of the subsequent Product-C; said product-B comprises PTFE, PPS, three surface-active substances consisting of monoethylene glycol, propylene glycol and APPE, the two pigments carbon black and mica, and deionised water as dispersing medium;
3) A third product (Product-C) applicable on said product-B and having high anti-adhesion power; this product could be considered as a finishing element of the anti-adherent treatment. Said product-C comprises PTFE, two surface-active substances consisting of monoethylene glycol and APPE, the two pigments carbon black and mica, and deionised water as dispersing medium.

All three foresaid products are aqueous dispersions and spread, one by one, in one or more layers on the aluminium discs that continuously move forwards, as provided in the former foresaid patent. The application of any layer is followed by a warm drying process (temperature of the element : 50-70 °C) in order to evaporate the water present in the compositions. After the last application and the relevant drying process the discs are baked at a temperature of 400-430 °C, preferably of 410-420 °C.

It is a further object of the present invention a process for painting aluminium discs to be moulded into cookware, comprising the following steps:
a) degreasing an aluminium disc;
b) rolling at least one layer of product-A;
c) drying said layer of product-A at 50-70 °C;
d) rolling at least one layer of product-B;
e) drying said layer of product-B at 50-70°C;
f) rolling at least one layer of product-C;
g) drying said layer of product-C at 50-70°C.
h) baking the coated disc, obtained in step (g), at 400-430°C; Through this operation it is possible to obtain a solid elastic anti-adherent film tightly fixed to the metallic support and moulding proof.

As components of the water-based formulations which constitue the product-A it is provided the use (as basic element for the fixing of PTFE to the aluminium substrate) of a polyamideimide resin (PAI) having the following generic formula: 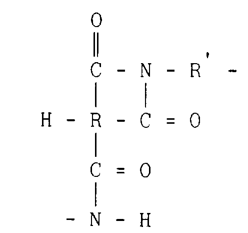 where R and R' are respectively organic tetravalent and bivalent radicals; the use of these radicals was described in combination with methylpolysiloxanic polyether-modified copolymers and colloidal silica in a previous Italian patent application N° 20 377 A/89 (filed by the same Applicant on May 4, 1989) referring to primers for fluoropolymers-based anti-adherent coatings.

In the formulation according to the present patent application the PAI adhesive action is advantageously strenghtened through an association with polyphenylensulfide (PPS) that helps in increasing the elastic characteristics of the painting film, which can be moulded without damages. Moreover, in the mixture are also present surface-active products with a coalescent action, that improve the film forming and the inter-penetration of the different product layers, as :
- polyethoxylated alkylphenoles (APPE) having the following general formula : 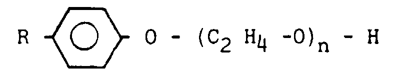 wherein n represents the ethoxylation degree comprised between 8 and 12 and R represents an alkylic group with a number of carbon atoms compraised between 6 and 12, as octyl and nonylphenole ethoxylates.
- monoethylene glycol
- propylene glycol
the finishing element of the mixture is a carbon black-based pigment.

The weight percentage of the components referred to the dry substances can be advantageously comprised between the following values :

| | |
|---|---|
| PTFE | = 7-10 |
| PAI | = 1.3-1.9 |
| PPS | = 10-15.4 |
| APPE | = 7.4-8.6 |
| monoethylene glycol | = 3.2-4.8 |
| propylene glycol | = 1.6-2.4 |
| carbon black | = 1.8-2.2 |
| deionised water | difference to 100 |

The formulation of product-B does not comprise the PAI resin, it provides a reduction of PPS content and an increasing of PTFE content and it comprises the other components present in the product-A. Together with carbon black some mica is present as pigment in order to give to the film a grey tending colouring.

The weight percentage of the components referred to the dry substances can be advantageously comprised between the following values :

| | |
|---|---|
| PTFE | = 13.6-20.4 |
| PPS | = 5.6-8.4 |
| APPE | = 7.2-8.8 |
| monoethylene glycol | = 3.2-4.8 |
| propylene glycol | = 1.6-2.4 |
| carbon black | = 1.8-2.2 |
| mica | = 1.7-2.3 |
| deionised water | difference to 100 |

The formulation of product-C does not comprise either PAI resin or PPS and it provides only PTFE, surface-active substances and pigments.

In this case the weight percentage of the components referred to the dry substances can be advantageously included in the following limits :

| | |
|---|---|
| PTFE | = 36-55 |
| APPE | = 7.3-8.7 |
| monoethylene glycol | = 3.1-5 |
| carbon black | = 0.5-3 |
| mica | = 3-5 |
| deionised water | difference to 100 |

In order to better explain the present invention three non-limitative examples of the invention are given hereafter, where the quantities and the percentages are expressed in weight.

### Example 1 - Product A

The following mixtures are prepared in advance :
- Mixture 1A : 700 parts of deionised water are added to 340 parts of PAI solved in 33% N-methylpyrrolidone/ dimethylacetamide 4/3 (RESISTHERM AI 133L - Bayer), the mixture is homogenised under stirring for some minutes.
- Mixture 2A : 140 part of octylphenole ethoxylated with 8 moles of ethyleneoxide (TRITON x 100 - Rohm and Haas), 70 parts of monoethyleneglycole (Dow Chemical) and 35 parts of propyleneglycole (Dow Chemical) are added to 600 parts of deionised water. The solution is warmed to 30°- 40° C under stirring to favour the complete solution of the surface-active agents, and then 220 parts of PPS (FORTRON x 0205/60 Hoechst) are added. The mixture is stirred at 30°- 40° C for 2-3 hours.
- Mixture 3A : 40 parts of naphthalenesulfonic acid sodium salt (TAMOL SN - Rohm and Haas) and 400 parts of carbon black (NERO PRINTEX
- Degussa) are added to 560 parts of deionised water. The resulting paste is charged in a steel ball mill and the pigment is dispersed for about 72 hours.
- Mixture 4A is an aqueous dispersion of PTFE 60%. (ALGOFLON - Montefluos)

### Formulation

The following mixtures are charged, in the given sequence, in a container provided of stirrer :
620 parts of mixture 2A
145 parts of mixture 4A
50 parts of mixture 3A

The mixtures are stirred 1 hour for homogenisation and then 148 parts of mixture 1A are added stirring for one more hour.

### EXAMPLE 2 - Product B

The following mixture are prepared in advance :
- Mixture 2B : 140 parts of nonylphenole ethoxylated with 10 moles of ethylene oxide (CHIMIPAL VN 10 - Ausimont) 70 parts of monoethylene glycole (Dow Chemical) and 35 parts of propylene glycole (Dow Chemical) are added to 600 parts of deionised water. The mixture is warmed at 30° - 40° C under stirring to favour the solution of the surface-active agents and 122 parts of PPS (FORTRON x 0205/60 Hoechst) are added. The mixture is stirred at 30° - 40° C for 2 - 3 hours.
- Mixture 3B : 80 parts of naphthalenesulfonic acid sodium salt (TAMOL SN - Rohm and Haas), 400 parts of carbon black (NERO PRINTEX - Degussa) and 400 parts of mica (MEARLIN SUPERFINE - Merck AG) are added to 1100 parts of deionised water.
   The obtained paste is charged in a steel ball mill and the pigments are dispersed for 72 hours.
- Mixture 4B is an aqueous dispersion of PTFE 60% (ALGOFLON - Montefluos).

### Formulation

In a container equipped with a stirrer the following mixture are charged in the given order :
555 parts of mixture 2B
283 parts of mixture 4B
100 parts of mixture 3B
and the mass is homogenised for 1 hour.

### EXAMPLE 3 - Product C

The following mixture are prepared in advance :
- Mixture 2C : 140 parts of octylphenole ethoxylated with 8 moles of ethylene oxide (TRITON x 100 - Rohm and Haas) and 70 parts of monoethylene glycole are added to 200 parts of deionised water. The mixture is stirred at room temperature to favour the solution of the surface-active agents.
- Mixture 3C : 80 parts of naphthalenesulfonic acid sodium salt (TAMOL SN - Rohm and Haas), 200 parts of carbon black (NERO PRINTEX - Degussa) and 600 parts of mica (MEARLIN SUPERSILK - Merck AG) are added to 1100 parts of deionised water.
   The obtained paste is charged in a steel ball mill and the pigments are dispersed for 72 hours.
- Mixture 4C is an aqueous dispersion of PTFE 60% (ALGOFLON - Montefluos).

### Formulation

In a container equipped with a stirrer the following mixture are charged in the given order :
250 parts of mixture 2C
600 parts of mixture 4C
140 parts of mixture 3C
and the mass is stirred during 1 hour for homogenising.

## Claims

1. A rollable painting formulation for anti-adherent coatings applicable on aluminium discs, previously degreased but non-pickled, characterised in that it comprises three kinds of products in the form of aqueous dispersions consisting of: a product-A having high adhesion power, usable as primary element to apply on the aluminium substrate, comprising: polytetrafluoroethylene (PTFE); polyamideimide resin (PAI); polyphenylensulfide (PPS); three surface-active substances consisting of monoethylene glycol, propylene glycol and polyethoxylated alkylphenols (APPE) having an ethoxyde number comprised between 8 and 12, and an alkyl group with a number of carbon atoms comprised between 6 and 12; the pigment carbon black; deionised water as dispersing medium; a product-B having less adhesion power than the previous product-A and closer to the anti-adherent nature of the subsequent product-C, usable as secondary element to apply afterwardly on said product-A, comprising: PTFE; PPS; three surface-active substances consisting of monoethylene glycol, propylene glycol acid APPE; the two pigments carbon black and mica; deionised water as dispersing medium; and a product-C having high anti-adhesion power, usable as finishing element to apply afterwardly on said product-B, comprising: PTFE; two surface-active substances consisting of monoethylene glycol and APPE; the two pigments carbon black and mica; deionised water as dispersing medium.

2. The painting formulation according to claim 1, characterised in that the ranges of weight percentages of the components of said product-A are the following :
| | |
|---|---|
| PTFE | = 7-10 |
| PAI | = 1.3-1.9 |
| PPS | = 10-15.4 |
| APPE | = 7.4-8.6 |
| monoethylene glycol | = 3.2-4.8 |
| propylene glycol | = 1.6-2.4 |
| carbon black | = 1.8-2.2 |
| deionised water | difference to 100 |

3. The painting formulation according to claim 1, characterised in that the range of weight percentages of the components of said product-B the following :
| | |
|---|---|
| PTFE | = 13.6-20.4 |
| PPS | = 5.6-8.4 |
| APPE | = 7.2-8.8 |
| monoethylene glycol | = 3.2-4.8 |
| propylene glycol | = 1.6-2.4 |
| carbon black | = 1.8-2.2 |
| mica | = 1.7-2.3 |
| deionised water | difference to 100 |

4. The painting formulation according to claim 1, characterised in that the range of weight percentages of the components of said product-C are the following :
| | |
|---|---|
| PTFE | = 36-55 |
| APPE | = 7.3-8.7 |
| monoethylene glycol | = 3-5 |
| carbon black | = 0.5-3 |
| mica | = 3-5 |
| deionised water | difference to 100 |

5. Domestic pots and pans having an anti-adherent external coating obtained by moulding of aluminium discs previously degreased but non-picked and covered with one or more layers of painting formulations claimed in the foregoing claims 1-4.

6. Process for painting aluminium discs to be moulded into cookware, characterized in that it comprises the following steps:
a) degreasing said aluminium disc;
b) rolling at least one layer of product-A as described in claim 1 or 2;
c) drying said layer of product-A at 50°-70°C;
d) rolling at least one layer of product-B as described in claim 1 or 3;
e) drying said layer of product-B at 50°-70°C;
f) rolling at least one layer of product-C as described in claim 1 or 4;
g) drying said layer of product-C at 50°-70°C;
h) baking the coated disc, obtained in step (g), at 400°-430°C.

## Patentansprüche

1. Aufwalzbare (aufrollbare) Beschichtungsformulierung zur Herstellung von Antihaft-Überzügen, die auf Aluminiumplatten bzw. -scheiben aufgebracht werden können, die vorher enffettet, aber nicht gebeizt worden sind, dadurch gekennzeichnet, daß sie drei Arten von Produkten in Form von wäßrigen Dispersionen umfaßt, die bestehen aus:
einem Produkt A mit einem hohen Haftvermögen, das als primäres Element zum Aufbringen auf das Aluminium-Substrat verwendbar ist und umfaßt Polytetrafluroethylen (PTFE); Polyamidimid-Harz (PAI); Polyphenylensulfid (PPS); drei oberflächenaktive Substanzen, bestehend aus Monoethylenglycol, Propylenglycol und polyethoxylierten Alkylphenolen (APPE) mit einer Ethoxid-Zahl zwischen 8 und 12 und einer Alkylgruppe mit 6 bis 12 Kohlenstoffatomen; das Pigment Ruß und entionisiertes Wasser als Dispergiermedium;
einem Produkt B mit einem geringeren Haftvermögen als das obengenannte Produkt A, das der Antihaft-Natur des anschließend aufgebrachten Produkts C näher steht und als sekundäres Element zum Aufbringen nach dem Produkt A verwendbar ist und umfaßt PTFE; PPS; drei oberflächenaktive Substanzen, bestehend aus Monoethylenglycol, Propylenglycol und APPE; die beiden Pigmente Ruß und Glimmer und entionisiertes Wasser als Dispergiermedium; und
einem Produkt C mit einem hohen Antihaft-Vermögen, das als Oberflächenbzw. Schluß-Behandlungselement verwendbar ist und nach dem Produkt B aufgebracht wird, das umfaßt PTFE; zwei oberflächenaktive Substanzen, bestehend aus Monoethylenglycol und APPE; die beiden Pigmente Ruß und Glimmer und entionisiertes Wasser als Dispergiermedium.

2. Beschichtungsformulierung nach Anspruch 1, dadurch gekennzeichnet, daß die Gewichtsprozentsätze der Komponenten des Produkts A in den folgenden Bereichen liegen:
| | |
|---|---|
| PTFE | 7-10 Gew.-% |
| PAI | 1,3-1,9 Gew.-% |
| PPS | 10-15,4 Gew.-% |
| APPE | 7,4-8,6 Gew.-% |
| Monoethylenglycol | 3,2-4,8 Gew.-% |
| Propylenglycol | 1,6-2,4 Gew. -% |
| Ruß | 1,8-2,2 Gew.-% |
| entionisiertes Wasser | Differenz zu 100 Gew.-%. |

3. Beschichtungsformulierung nach Anspruch 1, dadurch gekennzeichnet, daß die Gewichtsprozentsätze der Komponenten des Produkts B in den folgenden Bereichen liegen:
| | |
|---|---|
| PTFE | 13,6-20,4 Gew.-% |
| PPS | 5,6-8,4 Gew.-% |
| APPE | 7,2-8,8 Gew.-% |
| Monoethylenglycol | 3,2-4,8 Gew.-% |
| Propylenglycol | 1,6-2,4 Gew.-% |
| Ruß | 1,8-2,2 Gew.-% |
| Glimmer | 1,7-2,3 Gew.-% |
| entionisiertes Wasser | Differenz zu 100 Gew.-%. |

4. Beschichtungsformulierung nach Anspruch 1, dadurch gekennzeichnet, daß die Gewichtsprozentsätze der Komponenten des Produkts C in den folgenden Bereichen liegen:
| | |
|---|---|
| PTFE | 36-55 Gew.-% |
| APPE | 7,3-8,7 Gew.-% |
| Monoethylenglycol | 3-5 Gew.-% |
| Ruß | 0,5-3 Gew.-% |
| Glimmer | 3-5 Gew.-% |
| entionisiertes Wasser | Differenz zu 100 Gew.-%. |

5. Haushalts-Töpfe und -Pfannen, die einen äußeren Antihaft-Überzug aufweisen und durch Formen von Aluminium-Platten bzw. -Scheiben hergestellt worden sind, die vorher entfettet, jedoch nicht gebeizt und mit einer oder mehreren Schichten von Beschichtungs-Formulierungen nach den Ansprüchen 1 bis 4 beschichtet worden sind.

6. Verfahren zum Beschichten von Aluminium-Platten bzw. -Scheiben, die zu Kochgeschirr geformt werden, dadurch gekennzeichnet, daß es die folgenden Stufen umfaßt:
a) Entfetten der genannten Aluminium-Platte bzw. -Scheibe;
b) Aufwalzen (Aufrollen) mindestens einer Schicht aus dem in Anspruch 1 oder 2 beschriebenen Produkt A;
c) Trocknen der genannten Schicht aus dem Produkt A bei 50 bis 70°C;
d) Aufwalzen (Aufrollen) mindestens einer Schicht aus dem in Anspruch 1 oder 3 beschriebenen Produkt B;
e) Trocknen der genannten Schicht aus dem Produkt B bei 50 bis 70°C;
f) Aufwalzen (Aufrollen) mindestens einer Schicht aus dem in Anspruch 1 oder 4 beschriebenen Produkt C;
g) Trocknen der genannten Schicht aus dem Produkt C bei 50 bis 70°C und
h) Brennen der in der Stufe (g) erhaltenen beschichteten Platte bzw. Scheibe bei 400 bis 430°C.

## Revendications

1. Formulation de peinture applicable au rouleau pour des revêtements anti-adhérents pouvant être appliquée sur des disques d'aluminium préalablement dégraissés mais non décapés, caractérisée en ce qu'elle comprend trois sortes de produits sous la forme de dispersions aqueuses consistant en : un produit A ayant un pouvoir adhésif élevé, utilisable comme élément primaire à appliquer sur le substrat d'aluminium, comprenant un polytétrafluoroéthylène (PTFE), une résine de polyamideimide (PAI), un poly(sulfure de phénylène) (PPS), trois substances tensioactives consistant en monoéthylène glycol, propylène glycol et alkylphénols polyéthoxylés (APPE) ayant un nombre d'éthoxy compris entre 8 et 12, et un groupe alkyle ayant un nombre d'atomes de carbone compris entre 6 et 12, un noir de carbone comme pigment et de l'eau désionisée comme milieu dispersant; un produit B ayant un pouvoir adhésif inférieur à celui du produit A précédent et plus proche de la nature anti-adhérente du produit C ultérieur, utilisable en tant qu'élément secondaire à appliquer ensuite sur ce produit A, comprenant un PTFE, un PPS, trois substances tensioactives consistant en monoéthylène glycol, propylène glycol et APPE, deux pigments consistant en noir de carbone et mica, et de l'eau désionisée comme milieu dispersant; et un produit C ayant un pouvoir anti-adhérent élevé, utilisable comme élément de finition à appliquer ensuite sur ce produit B, comprenant un PTFE, deux substances tensioactives consistant en monoéthylène glycol et APPE, deux pigments consistant en noir de carbone et mica, et de l'eau désionisée comme milieu dispersant.

2. Formulation de peinture suivant la revendication 1, caractérisée en ce que les gammes de pourcentages en poids des composants de ce produit A sont les suivantes :
| | |
|---|---|
| PTFE | = 7 à 10 |
| PAI | = 1,3 à 1,9 |
| PPS | = 10 à 15,4 |
| APPE | = 7,4 à 8,6 |
| Monoéthylène glycol | = 3,2 à 4,8 |
| Propylène glycol | = 1,6 à 2,4 |
| Noir de carbone | = 1,8 à 2,2 |
| Eau désionisée | qsp pour 100 |

3. Formulation de peinture suivant la revendication 1, caractérisée en ce que les gammes de pourcentages en poids des composants de ce produit B sont les suivantes :
| | |
|---|---|
| PTFE | = 13,6 à 20,4 |
| PPS | = 5,6 à 8,4 |
| APPE | = 7,2 à 8,8 |
| Monoéthylène glycol | = 3,2 à 4,8 |
| Propylène glycol | = 1,6 à 2,4 |
| Noir de carbone | = 1,8 à 2,2 |
| Mica | = 1,7 à 2,3 |
| Eau désionisée | qsp pour 100 |

4. Formulation de peinture suivant la revendication 1, caractérisée en ce que les gammes de pourcentages en poids des composants de ce produit C sont les suivantes :
| | |
|---|---|
| PTFE | = 36 à 55 |
| APPE | = 7,3 à 8,7 |
| Monoéthylène glycol | = 3 à 5 |
| Noir de carbone | = 0,5 à 3 |
| Mica | =3 à 5 |
| Eau désionisée | qsp pour 100 |

5. Batterie de cuisine à usage domestique ayant un revêtement externe anti-adhérent obtenue par moulage de disques d'aluminium préalablement dégraissés mais non décapés et recouverte d'une ou de plusieurs couches de formulations de peinture suivant les revendications précédentes 1 à 4.

6. Procédé pour peindre des disques d'aluminium devant être moulés en articles de cuisine, caractérisé en ce qu'il comprend les étapes suivantes :
(a) dégraissage de ce disque d'aluminium;
(b) application au rouleau d'au moins une couche de produit A tel que décrit dans les revendications 1 ou 2;
(c) séchage de cette couche de produit A à une température de 50 à 70°C;
(d) application au rouleau d'au moins une couche de produit B tel que décrit dans les revendications 1 ou 3;
(e) séchage de cette couche de produit B à une température de 50 à 70°C;
(f) application au rouleau d'au moins une couche de produit C tel que décrit dans les revendications 1 ou 4;
(g) séchage de cette couche de produit C à une température de 50 à 70°C;
(h) cuisson du disque revêtu obtenu dans l'étape (g) à une température de 400 à 430°C.
